# EUROPEAN PATENT APPLICATION

(11) **EP 1 570 980 A1**
(43) Date of publication of application: **07.09.2005**
(21) Application number: 03778784.3
(22) Date of filing: 10.12.2003
(51) Int. Cl.: B32B 5/16, C09D 1/00, C09D 5/00

(54) **ARTICLE HAVING FUNCTIONAL COATING FILM THEREON, METHOD FOR MANUFACTURE THEREOF, AND APPLYING MATERIAL FOR FORMING FUNCTIONAL COATING FILM**

(30) Priority: 10.12.2002 JP 2002358691; 17.07.2003 JP 2003198489
(71) Applicant: Nippon Sheet Glass Company, Limited, Tokyo 105-8552 (JP)
(72) Inventor: TERANISHI, Toyoyuki, NIPPON SHEET GLASS CO., LTD., Osaka-shi, Osaka 541-0041 (JP); TSUJINO, Toshifumi, NIPPON SHEET GLASS CO., LTD., Osaka-shi, Osaka 541-0041 (JP); KAMITANI, Kazutaka, NIPPON SHEET GLASS CO., LTD., Osaka-shi, Osaka 541-0041 (JP)
(74) Representative: Gille Struck Neidlein Prop Roos
(86) International application number: PCT/JP2003/015813
(87) International publication number: WO 2004/052640

(57) **Abstract**

An article coated with a functional coating film which has a base material, a primer layer coating the surface of the base material and having fine roughness and a functional layer coating the primer layer. The primer layer having fine roughness has portions formed by unevenly accumulating fine particles. The primer layer in the article contains silicon oxide as the main component, and the excellent transparency and the fine roughness are simultaneously exhibited.

## Description

### TECHNICAL FIELD

The present invention relates to an article coated with a functional coating film, a process for producing the article and a coating material for forming a functional coating film. More particularly, the present invention relates to an article coated with a water repellent or antifouling coating film which comprises a primer layer comprising silicon oxide as the main component and having fine roughness, a process for producing the article and a coating material for forming a functional coating film.

### BACKGROUND ART

The water repellent property or the hydrophilic property can be provided to the surface of a base material such as glass and a resin by forming roughness on the surface of the base material.

In general, the wetting property of the surface of a solid is affected by the roughness of the surface. When the surface is hydrophilic, the hydrophilic property is enhanced on a rough surface. When the surface is hydrophobic, the water repellent property is enhanced on a rough surface. This phenomenon is exhibited remarkably when the surface has a fractal structure. Therefore, it is considered that a fractal surface can be an ultra water repellent surface or an ultra hydrophilic surface depending on the material.

When the contact angle of water exceeds 150 degrees, the condition is called "ultra water repellent". When the surface is so much hydrophilic that the measurement of the contact angle is difficult, the condition is called "ultra hydrophilic".

Various processes for forming a water repellent coating film by forming roughness on the surface of a base material such as glass and a resin have been known. Examples of such a process include a process in which fine protrusions are formed on the surface of a plastic film by the plasma treatment, and then a fluorine compound is chemically adsorbed (Japanese Patent Application Laid-Open No. Heisei 6(1994)-25449), a process in which a fine rough structure is formed on the surface of glass by coating the surface with a treatment fluid containing a condensate of a metal alkoxide, fine particles of a metal and a silane compound having a fluoroalkyl group, followed by drying the formed coating film (Japanese Patent Application Laid-Open No. Heisei 11(1999)-286784), a process in which roughness is formed on the surface of a base plate by coating the surface with a coating fluid containing a polycondensate of a trialkoxysilane, followed by the heat treatment of the formed coating film (Japanese Patent Application Laid-Open No. 2000-144116), a process in which fine roughness is formed on the surface of a base material by coating the surface with a fluid containing an aluminum compound to form a coating film, followed by dipping the formed laminate into warm water (Japanese Patent Application Laid-Open No. 2001-17907), and a process in which a layer having fine pores having an average diameter of 100 nm to 2 µm is formed on a base material by coating the base material with a fluid prepared by adding to a solvent a metal alkoxide and a substance which forms a phase separate from the alkoxide phase in the solvent and decomposes, burns or sublimes at a temperature in the range of the room temperature to 700°C, followed by the heat treatment (Japanese Patent Application Laid-Open No. 2001-207123).

However, when a film is prepared in accordance with any of the processes disclosed in Japanese Patent Application Laid-Open Nos. Heisei 6(1994)-25449, Heisei 11(1999)-286784 and 2001-207123, the thickness of the film and/or the roughness is great. Due to this property, the transmitted light is scattered to increase the haze value, and transparency of the coating film deteriorates.

In accordance with the technology disclosed in Japanese Patent Application Laid-Open Nos. 2000-144116 and 2001-207123, since it is necessary that the coating layer formed after the coating fluid is applied to the base material be treated at a high temperature, the base material is limited to a material having a great heat resistance. The heat treatment is also necessary.

In accordance with the process disclosed in Japanese Patent Application Laid-Open No. Heisei 6(1994)-25449, since the roughness is formed in accordance with the plasma treatment, it is necessary that an apparatus for the plasma treatment is necessary.

In accordance with the process disclosed in Japanese Patent Application Laid-Open No. 2001-17907, since the roughness is formed by dipping into warm water, an apparatus for supplying warm water is necessary.

It is considered that, when roughness is formed, for example, on the surface of a material exhibiting the hydrophobic property, the greater the roughness of the surface, the greater the contact angle with water. When the contact angle exceeds 150 degrees, the ultra water repellent property is exhibited so remarkably that it is difficult that droplets of water remain on the surface of the base material. For exhibiting the ultra water repellent property, it is considered to be necessary that a shape which can hold a great amount of the air between the rough surface and the droplets be formed.

However, when roughness of several hundred nm or greater is present on the surface, a problem arises in that light is scattered to cause haze, and the transparency is adversely affected in the case of a transparent base material.

The present invention has an object of overcoming the above problems and providing an article coated with a functional coating film which comprises a primer layer comprising silicon oxide as the main component and simultaeously exhibiting excellent transparency and fine roughness. The present invention has another object of providing a process for producing the characteristic article coated with a functional coating film by forming a functional layer on the primer layer without adversely affecting the function of the primer layer which comprises silicon oxide as the main component and has fine roughness, and a coating material for forming the functional coating film.

### DISCLOSURE OF THE INVENTION

As the result of intensive studies by the present inventors to achieve the above objects, the present invention provides:
(1) An article coated with a functional coating film which comprises a base material, a primer layer which coats a surface of the base material and has fine roughness and a functional layer coating the primer layer, wherein the primer layer having fine roughness has portions formed by unevenly accumulating fine particles;
(2) An article coated with a functional coating film described in (1), wherein the primer layer comprises silicon oxide as a main component;
(3) An article coated with a functional coating film described in any one of (1) and (2), wherein an average thickness (H) of the functional coating film comprising the primer layer and the functional layer is 30 nm or greater and 200 nm or smaller, and a difference between a maximum height of profile (Ry) on a surface and the average thickness (H) of the functional coating film is 50 nm or greater;
(4) An article coated with a functional coating film described in (1), wherein a diameter of the fine particles is 5 to 100 nm;
(5) An article coated with a functional coating film described in (1), wherein a surface roughness of the functional coating film comprising the primer layer and the functional layer is at least 10 nm expressed as an arithmetical mean deviation of the assessed profile (Ra), and a haze value of the functional coating film is 1% or smaller;
(6) An article coated with a functional coating film described in (1), wherein the functional layer is a water repellent coating film or an antifouling coating film;
(7) An article coated with a functional coating film described in (6), wherein the water repellent coating film is an organic coating film having at least one of fluoroalkyl groups and alkyl groups;
(8) An article coated with a functional coating film described in (7), wherein the alkyl group includes at least one group selected from octyl group, decyl group and dodecyl group;
(9) An article coated with a functional coating film described in (6), wherein a contact angle of water with the water repellent coating film measured by placing 2 mg of a water droplet on a surface of the water repellent coating film is at least 145 degrees;
(10) An article coated with a functional coating film described in (6), wherein the antifouling coating film is an organic coating film having a polyalkyleneoxyl group;
(11) An article coated with a functional coating film described in (1), wherein the base material is a material selected from transparent glass plates, resin plates and resin films;
(12) A coating material for forming a functional coating film which is a coating material for forming a primer layer which comprises silicon oxide as a main component and has portions formed by unevenly accumulating fine particles of silicon oxide and a functional layer on the formed primer layer, the coating material comprising a fluid containing the fine particles of silicon oxide and a fluid for forming the functional layer in combination;
(13) A coating material for forming a functional coating film which is a coating material for forming a primer layer which comprises silicon oxide as a main component and has portions formed by unevenly accumulating fine particles of silicon oxide and a functional layer on the formed primer layer, the coating material comprising a fluid containing the fine particles of silicon oxide and a functional material;
(14) A coating material for forming a functional coating film described in any one of (12) and (13), wherein the fine particles of silicon oxide comprise fine particles having shapes formed by three dimensional bonding, and a solvent of the fluid containing the fine particles of silicon oxide or a solvent of the fluid containing the fine particles of silicon oxide and a functional material is a solvent which can disperse the fine particles of silicon oxide;
(15) A coating material for forming a functional coating film described in (14), wherein the fine particles of silicon oxide comprise fine particles having shapes formed by three dimensional bonding of spherical fine particles having a diameter of 5 to 100 nm to each other over a length of 30 to 300 nm;
(16) A coating material for forming a functional coating film described in (15), wherein the fine particles of silicon oxide comprise fine particles having shapes formed by cyclic bonding of the spherical fine particles to each other;
(17) A coating material for forming a functional coating film described in any one of (12) and (13), wherein the fine particles of silicon oxide comprise fine particles having shapes formed by one dimensional to three dimensional bonding, and a solvent of the fluid containing the fine particles of silicon oxide or a solvent of the fluid containing the fine particles of silicon oxide and a functional material is a mixed solvent comprising a solvent which can disperse the fine particles of silicon oxide and a solvent which cannot disperse the fine particles of silicon oxide;
(18) A coating material for forming a functional coating film described in (17), wherein the fine particles of silicon oxide comprise fine particles having shapes formed by one dimensional to three dimensional bonding of spherical fine particles having a diameter of 5 to 100 nm to each other over a length of 30 to 300 nm;
(19) A coating material for forming a functional coating film described in (18), wherein the fine particles of silicon oxide comprise fine particles having shapes formed by linear and/or cyclic bonding of the spherical fine particles to each other;
(20) A coating material for forming a functional coating film described in any one of (14) and (17), wherein the solvent which can disperse the fine particles of silicon oxide comprises a hydrophilic solvent;
(21) A coating material for forming a functional coating film described in (20), wherein the hydrophilic solvent is an alcohol-based solvent;
(22) A coating material for forming a functional coating film described in (17), wherein the solvent which cannot disperse the fine particles of silicon oxide is a nonaqueous solvent;
(23) A coating material for forming a functional coating film described in (22), wherein the nonaqueous solvent is at least one of hydrocarbon solvents and silicone-based solvents;
(24) A coating material for forming a functional coating film described in (17), wherein, in the mixed solvent, the solvent which can disperse the fine particles of silicon oxide is more volatile than the solvent which cannot disperse the fine particles of silicon oxide;
(25) A coating material for forming a functional coating film described in any one of (12) and (13), wherein at least one of metal compounds is added to the fluid containing the fine particles of silicon oxide or the fluid containing the fine particle of silicon oxide and a functional material;
(26) A coating material for forming a functional coating film described in (13), wherein the fluid containing the fine particle of silicon oxide and a functional material comprises 0.01 to 3% by mass of water and 0.00001 to 0.1% by mass of a catalyst;
(27) A coating material for forming a functional coating film described in any one of (12) and (13), wherein the functional layer is a water repellent coating film or an antifouling coating film;
(28) A coating material for forming a functional coating film described in (27), wherein the water repellent coating film is an organic coating film having at least one of fluoroalkyl groups and alkyl groups;
(29) A coating material for forming a functional coating film described in (28), wherein the alkyl groups include at least one group selected from octyl group, decyl group and dodecyl group;
(30) A process for producing an article coated with a functional coating film which comprises a base material, a primer layer which coats a surface of the base material and has fine roughness and a functional layer coating the primer layer, the process comprising steps of coating the surface of the base material with a fluid containing fine particles of silicon oxide, forming the primer layer having fine roughness by unevenly accumulating the fine particles of silicon oxide on the surface of the base material, and coating the formed primer layer with a fluid for forming the functional layer;
(31) A process for producing an article coated with a functional coating film described in (30), wherein, after the surface of the base material is coated with the fluid containing the fine particles of silicon oxide, the fluid coating the surface of the base material is air dried at an ordinary temperature;
(32) A process for producing an article coated with a functional coating film described in (30), wherein the fine particles of silicon oxide comprise fine particles having shapes formed by one dimensional to three dimensional bonding, a solvent of the fluid containing the fine particles of silicon oxide is a mixed solvent comprising a solvent which can disperse the fine particles of silicon oxide and a solvent which cannot disperse the fine particles of silicon oxide, and, in the step of coating the surface of the base material with a fluid containing the fine particles of silicon oxide, the surface of the base material is kept wet with the fluid containing the fine particles of silicon oxide until at least the solvent which can disperse the fine particles of silicon oxide is vaporized;
(33) A process for producing an article coated with a functional coating film described in (30), which comprises adding at least one of metal compounds to the fluid containing the fine particles of silicon oxide, coating the surface of the base material with the obtained fluid containing the fine particles of silicon oxide, air drying the fluid coating the surface of the base material at an ordinary temperature, and baking an obtained film at 150 to 650°C;
(34) A process for producing an article coated with a functional coating film described in (30), wherein the primer layer is coated with the fluid for forming the functional layer without mechanically touching the primer layer;
(35) A process for producing an article coated with a functional coating film which comprises a base material, a primer layer which coats a surface of the base material and has fine roughness and a functional layer coating the primer layer, the process comprising steps of coating the surface of the base material with a fluid containing the fine particles of silicon oxide and a functional material, and forming the primer layer having fine roughness by unevenly accumulating the fine particles of silicon oxide on the surface of the base material and the functional layer on the formed primer layer;
(36) A process for producing an article coated with a functional coating film described in (35), wherein, after the surface of the base material is coated with the fluid containing the fine particles of silicon oxide and a functional material, the fluid coating the surface of the base material is air dried at an ordinary temperature; and
(37) A process for producing an article coated with a functional coating film described in (35), which comprises adding at least one of metal compounds to the fluid containing the fine particles of silicon oxide and a functional material, coating the surface of the base material with the obtained fluid containing the fine particles of silicon oxide and a functional material, air drying the fluid coating the surface of the base material at an ordinary temperature, and baking an obtained film at 150 to 350°C.

### BRIEF DESCRIPTION OF THE DRAWINGS

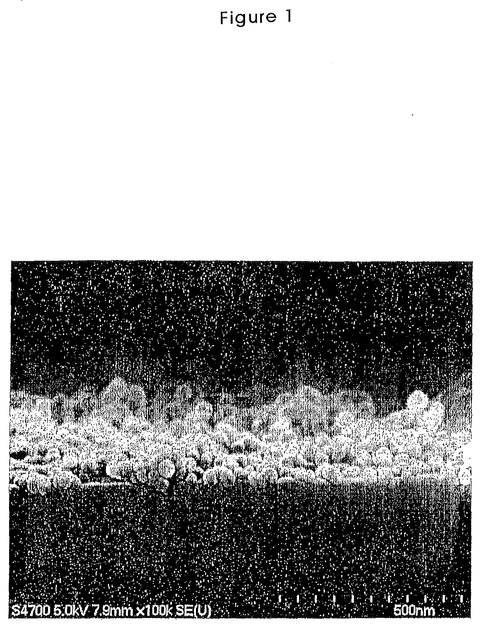

Figure 1 shows a diagram exhibiting the shape of the surface of a glass plate treated for repelling water.

### THE MOST PREFERRED EMBODIMENT TO CARRY OUT THE INVENTION

The article coated with a functional coating film of the present invention is an article comprising a base material, a primer layer coating the surface of the base material and a functional layer coating the primer layer.

The primer layer in the article coated with a functional coating film of the present invention has a structure in which fine particles comprising, for example, silicon oxide such as silica as the main component are accumulated unevenly and randomly. The primer layer further has a structure having the uneven height of roughness so that the roughness of the surface is increased and the air can be held in minute spaces between the fine particles.

In the present invention, it is preferable that the diameter of a single particle is in the range of 5 to 100 nm, more preferably in the range of 10 to 100 nm and most preferably in the range of 10 to 50 nm. When the diameter of a single particle is smaller than 5 nm, there is the possibility that the effective roughness is not obtained. When the diameter of a single particle exceeds 100 nm, there is the possibility that the transparency of the film is lost and the haze value increases.

In the present invention, it is preferable that the average thickness (H) of the entire functional coating film comprising the primer layer and the functional layer is 30 nm or greater and 200 nm or smaller, and the difference between the maximum height of profile (Ry) on the surface and the average thickness (H) of the functional coating film is 50 nm or greater. It is advantageous that these conditions are satisfied since the color tone of the reflected light is neutral and the haze value is small. When the average thickness (H) of the functional coating film is 30 nm or greater, the water repellent property does not decrease. When the average thickness (H) of the functional coating film is 200 nm or smaller, the reflected light has the rainbow colors, and the problem of a loud color in the reflected light can be prevented. From the above standpoint, it is more preferable that the average thickness (H) of the functional coating film is 30 nm or greater and 100 nm or smaller.

It is preferable that the difference between the maximum height of profile (Ry) on the surface of the functional coating film and the average thickness (H) of the functional coating film is 50 nm or greater since the structure having fine roughness sufficient for exhibiting the ultra water repellent property can be formed. To obtain the difference between the maximum height of profile (Ry) of the functional coating film and the average thickness (H) of the functional film of 50 nm or greater, the fine particles are accumulated to form the primer layer in a manner such that the difference between the maximum height of the roughness of the primer layer and the average thickness (H) of the primer layer is increased to, for example, 50 nm or greater.

It is preferable that the fine particles are accumulated randomly on the surface of the base material. It is preferable that the difference between the highest point and the lowest point on the surface of the primer layer as measured by the size of the fine particle is at least the size of two particles and more preferably the size of three particles or more. It is most preferable that the maximum height of profile (Ry) of the entire functional coating film is 100 nm or greater.

It is preferable that the surface of the base material has portions where the fine particles are accumulated and portions where the fine particles are not accumulated. Due to this structure, the difference between the lowest point and the highest point on the surface of the primer layer can be increased, and the structure in which the surface has the fine roughness sufficient for exhibiting the ultra water repellent property can be formed. It is preferable that the area where the fine particles are not accumulated is greater since the haze value of the film is decreased. To exhibit the above effect sufficiently, it is preferable that the area where the fine particles are accumulated is in the range of 30 to 90% and more preferably in the range of 50 to 80% of the entire area.

In the present specification, the maximum height of profile (Ry) is the value defined by the Japanese Industrial Standard B 0601 (1994).

Due to the above structure, the excellent transparency of the film can be achieved while the structure has the fine roughness as the basis for the ultra water repellent property.

The above numbers have been decided, as described later, based on the results of the observation of the shape of the surface of coating films by a scanning electron microscope and on the water repellent property of the coating film.

"The main component" means a component occupying 50% by mass or greater in the present specification.

Heretofore, a process in which, after a smooth surface is formed, roughness is formed on the formed surface in accordance with a process using plasma, a treatment with warm water or baking at a high temperature, is widely conducted. However, the cost of the apparatus is great, and the type of the base material used for forming the roughness is limited. For example, it is actually impossible that this process is applied to a glass plate attached to an automobile.

On the other hand, in accordance with the present invention, it is not necessary to select the base material and the surrounding for the material since the roughness can be formed by coating the coating fluid on the surface of the base material and drying the fluid.

It is preferable that the primer layer comprising silicon oxide as the main component which is formed in accordance with the present invention has a surface roughness of at least 10 nm expressed as the arithmetical mean deviation of the assessed profile (Ra) and a haze value of the primer layer of 1.0% or smaller and more preferably 0.5% or smaller. As shown by this value, the primer layer comprising silicon oxide as the main component exhibits excellent transparency.

As described above, the water repellent property can be improved, in general, by increasing the roughness of the surface. However, in the case of rough surfaces formed in accordance with the conventional technology, the haze value of the film increases as the roughness of the surface is increased, and it is difficult that the excellent water repellent property and the excellent transparency are exhibited simultaneously.

The upper limit of the surface roughness of the primer layer is not particularly limited. It is preferable that the surface roughness expressed as the haze value is 1.0% or smaller.

In contrast to conventional primer layers formed in accordance with the conventional technology, the surface of the primer layer comprising silicon oxides as the main component which is formed in accordance with the present invention has an increased surface roughness due to the effect of the roughness exhibited by the fine particles and the fine rough structure which can hold the air therein. Since the primer layer comprising silicon oxide as the main component is basically hydrophilic, the primer layer comprising silicon oxide as the main component formed in accordance with the present invention exhibits the ultra hydrophilic property in combination with the fine rough structure. The primer layer comprising silicon oxide as the main component can work as the primer layer for the functional layer exhibiting the ultra water repellent property or the antifouling property.

In the present invention, the primer layer comprises silicon oxide as the main component and may also comprise other components such as metal oxides, examples of which include titanium oxide, aluminum oxide and zirconium oxide. The primer layer comprising silicon oxide as the main component is occasionally called a silica primer film.

In the process of the present invention for forming the primer layer comprising silicon oxide as the main component, it is the most important that the fine particles are randomly accumulated on the surface of the base material. In accordance with the conventional technology, for example, the surface of a base material is coated with a fluid prepared by dispersing fine particles of spherical silica in a solvent, followed by adding a silica material as the binder. However, the fine particles tend to be accumulated relatively uniformly in accordance with the conventional technology, and the roughness sufficient for exhibiting the ultra water repellent property is not formed on the coating film.

In the present invention, the attention has been paid to the combination of the fine particles of silicon oxide and the solvent for dispersing the fine particles as the means for randomly accumulating the fine particles on the surface of the base material. It has been found that the following two combinations are preferable.

### (The first process)

In accordance with the first process, it is essential that fine particles of silicon oxide comprising fine particles having shapes formed by three dimensional bonding and a solvent which can disperse the fine particles is used in combination. As the fine particles, fine particles having shapes formed by three dimensional bonding of spherical fine particles having a diameter of 5 to 100 nm and more preferably 10 to 100 nm to each other over a length of 30 to 300 nm are preferable. Fine particles having shapes formed by three dimensional bonding of spherical fine particles having a diameter of 10 to 50 nm to each other over a length of 40 to 200 nm are more preferable. Examples of the shape formed by three dimensional bonding include three dimensional ring shapes.

The above process is characterized in that the fine particles having shapes formed by three dimensional bonding are used. When the fluid containing the above fine particles is applied to the surface of a base material, it is considered that the fine particles having the shapes formed by three dimensional bonding are entangled with each other and accumulated on the surface of the base material, and the obtained coating film has the shape formed with the unevenly and randomly accumulated fine particles.

The solvent is not particularly limited as long as the fine particles can be dispersed in the solvent. For example, a solvent containing a hydrophilic solvent can be used. Among the hydrophilic solvents, alcohol-based solvents are preferable due to the excellent handling property.

It is preferable that a mixed solvent comprising two or more solvents having different volatility is preferable. In particular, the mixed solvent is preferable when a film is formed under the environment of a high humidity since generation of haze (whitening) during the film formation can be prevented. It is considered that, since the surface of the base material is cooled by the heat of vaporization when the solvent is dried during the application of the fluid, water in the air tends to be condensed to form dew on the surface of the base material. The amount of the dew condensate increases under the environment of a high humidity, and the haze value increases. In contrast, it is considered that, when the drying is conducted in a plurality of steps using the mixed solvent comprising two or more types of solvents having different volatility, the solvents in the fluids for the second step and later are left remaining while the solvent in the fluid for the first step is vaporized, and the effect of the dew condensation is suppressed.

In accordance with the first process, after the coating fluid is applied to the surface of the base material, the coating fluid is air dried. The condition for the coating and the drying of the coating fluid is not particularly limited as long as the coating fluid can be dried. The coating may be conducted at the ordinary temperature,

### (The second process)

In accordance with the second process, it is essential that fine particles of silicon oxide comprising fine particles having shapes formed by one dimensional to three dimensional bonding and a mixed solvent comprising a solvent which can disperse the fine particles of silicon oxide and a solvent which cannot disperse the fine particles of silicon oxide is used in combination. As the fine particles, fine particles having shapes formed by one dimensional to three dimensional bonding of spherical fine particles having a diameter of 5 to 100 nm and more preferably 10 to 100 nm to each other over a length of 30 to 300 nm are preferable. Fine particles having shapes formed by one dimensional to three dimensional bonding of spherical fine particles having a diameter of 10 to 50 nm to each other over a length of 40 to 200 nm are more preferable. Examples of the shape formed by one dimensional or two dimensional bonding include one dimensional or two dimensional chain shapes, respectively, and examples of the shape formed by three dimensional bonding include three dimensional ring shapes.

In accordance with the second process, unlike the first process, the fine particles of silicon oxide may have shapes formed by one dimensional or two dimensional bonding. This difference is based on the specific character of the seconded process in that the mixed solvent comprising a solvent which can disperse the fine particles of silicon oxide and a solvent which cannot disperse the fine particles of silicon oxide is used.

When the fine particles of silicon oxide are added to a solvent which cannot disperse the fine particles of silicon oxide, the fine particles are precipitated. Therefore, in the second process, the fine particles are dispersed in the mixed solvent comprising a solvent which can disperse the fine particles of silicon oxide and a solvent which cannot disperse the fine particles of silicon oxide. The fine particles are present in the fluid in the condition dispersed in the solvent which can disperse the fine particles. When the fluid used in the present process is applied to the surface of the base material, the solvent which can disperse the fine particles is vaporized first, and the solvent which cannot disperse the fine particles alone remains on the surface of the base material. The fine particles cannot be dispersed and arc accumulated on the glass base plate. It is considered that, at this time, fine particles are accumulated on the surface of the base material in a manner such that the fine particles are expelled from the fluid and, therefore, the fine particles are accumulated unevenly and randomly.

Therefore, it is made possible in accordance with the second process that the roughness exhibiting the ultra water repellent property can be formed even when the fine particles of silicon oxide have shapes formed by one dimensional or two dimensional bonding.

The relative amounts of the solvent which can disperse the fine particles and the solvent which cannot disperse the fine particles is not particularly limited as long as the fine particles of silicon oxide can be dispersed. It is preferable that the ratio of the amount of the solvent which can disperse the fine particles to the amount of the solvent which cannot disperse the fine particles is in the range of 0.3 to 10 and more preferably in the range of 0.6 to 5. When the above ratio is 0.3 or greater, the fine particles are sufficiently dispersed in the mixed solvent without precipitation. When the above ratio is 10 or smaller, the fine particles tend to be accumulated unevenly and randomly. Thus, such a ratio is advantageous.

In the mixed solvent used in the second process, it is preferable that the solvent which can disperse the fine particles of silicon oxide is more volatile than the solvent which cannot disperse the fine particles of silicon oxide. When the solvent which can disperse the fine particles is more volatile, the uneven and random accumulation of the fine particles is more easily achieved.

Examples of the solvent which can disperse the fine particles include solvents comprising hydrophilic solvents. Solvents comprising alcohol-based solvents exhibiting the excellent handling property are preferable. The solvent which cannot disperse the fine particles is not particularly limited as long as the solvent is compatible with the solvent which can disperse the fine particles. Examples of the solvent which cannot disperse the fine particles include nonaqueous solvents such as hydrocarbon-based solvents and/or silicone-based solvents.

In accordance with the second process, it is preferable that, after the above fluid is applied to the surface of the base material, the surface of the base material is kept wet with the fluid until at least the solvent which can disperse the fine particles is vaporized. When the time of keeping the surface of the base material wet with the fluid is short, there is the possibility that the fine particles are not sufficiently accumulated on the surface of the base material, and such a condition is not preferable.

As the process for forming the functional layer in the present invention, a fluid for forming the functional layer may be applied to the primer layer comprising silicon oxide as the main component which is formed above (this process will be referred to as "the two component coating process"), or the functional material is added to the fluid for forming the primer layer described above so that the primer layer is formed on the base material and the functional layer is formed on the formed primer layer in the single coating step (this process will be referred to as "the single component coating process").

In other words, as the coating material, a coating material for forming the functional coating film comprising a fluid containing the fine particles of silicon oxide and a fluid for forming the functional layer in combination (the two component coating process) or a coating material for forming the functional coating film comprising a fluid containing the fine particles of silicon oxide and a functional material which will be described specifically later (the single component coating process) is used. By applying the coating material to the surface of the base material, the primer layer which comprises silicon oxide as the main component and has portions formed by unevenly and randomly accumulating the fine particles of silicon oxide is formed, and then the functional layer is formed on the formed primer layer.

It is preferable that the content of water in the fluid prepared by adding the functional material to the fluid for forming the primer layer is in the range of 0.01 to 3% by mass and more preferably in the range of 0.1 to 1.5% by mass. A content of water in this range is preferable since, in particular in the single coating process described above, hydrolysis and polycondensation are occasionally necessary to bond the functional material to the primer layer. When the content of water is smaller than 0.01% by mass, there is the possibility that the sufficient hydrolysis does not take place. When the content of water exceeds 3% by mass, there is the possibility that water remains in the functional coating film, and the appearance deteriorates. Thus, a content of water outside the above range is not preferable. It is preferable that a catalyst is added to accelerate the hydrolysis. The catalyst is not particularly limited as long as the hydrolysis is accelerated. It is preferable that an acid catalyst is used, and it is more preferable that hydrochloric acid is used from the standpoint of the easiness in the handling. The amount of the acid catalyst is not particularly limited as long as the effect of the acid catalyst is exhibited. The amount is, in general, in the range of 0.00001 to 0.1% by mass and preferably in the range of 0.001 to 0.01% by mass. When the amount of the catalyst is less than 0.00001% by mass, the bonding of the functional material to the base material is suppressed, and there is the possibility that the function such as the water repellent property decreases and that the time before the function such as the water repellent property is exhibited increases. When the amount exceeds 0.1% by mass, the primer layer becomes excessively dense, and there is the possibility that the formation of the roughness for exhibiting the function such as the water repellent property on the primer layer becomes difficult. Thus, an amount outside the above range is not preferable.

It is suitable for decreasing the content of water in the fluid actually used for the application that the functional material alone is hydrolyzed in the solvent containing the catalyst and water in advance, and the functional material obtained after the hydrolysis is added to the fluid for forming the primer layer.

When the fine particles of silicon oxide are dispersed in water, it is preferable that, after the fluid having the fine particles of silicon oxide dispersed in water is diluted with a solvent, the fine particles are treated for dehydration with molecular sieves or the like so that the content of water can be decreased.

In the single component coating process described above, it is preferable that at least a portion of the functional material is bonded to the fine particles of silicon oxide in the fluid. Due to the bonding of the functional material to the fine particles of silicon oxide, it is made possible that the time before the function such as the ultra water repellent property is exhibited after the application of the above fluid to the surface of the base material is decreased.

As the process for bonding the functional material to the fine particles of silicon oxide in the fluid, the functional material, the fine particles of silicon oxide, water and the catalyst may be added to a solvent, and the co-hydrolysis and the polycondensation may be conducted in the fluid. In this process, it is preferable that the functional material and the fine particles of silicon oxide are added in great concentrations and, after the reaction is allowed to proceed at a temperature in the range of 20 to 80°C for several hours to several days, the fluid is diluted to have suitable concentrations.

It is preferable that a metal compound and/or water glass is added to the fluid for forming the primer layer which comprises the fine particles of silicon oxide or to the fluid prepared by adding the functional material to the fluid for forming the primer layer. When the metal compound and/or water glass is added, this substance works as the binder, and durability of the article coated with a functional coating film of the present invention is increased.

As the metal used for the metal compound, silicon, zirconium, aluminum, cerium and titanium are preferable. Chlorides, alkoxides and acetylacetonates of those metals are preferable. Among these compounds, chlorides and alkoxides of silicon are more preferable.

When the above metal compound is used, it is preferable in the two component coating process that the fluid for the primer layer is applied, air dried at the ordinary temperature and baked at 150 to 650°C, and then the fluid for forming the functional layer is applied.

In the single component coating process, it is preferable that the applied coating fluid is air dried at the ordinary temperature and then baked at a temperature of 150 to 350°C.

In the single component coating process, the combination of the fine particles of silicon oxide and the solvent which can disperse the fine particles of silicon oxide described above can be used without modifications as the solvent of the fluid containing the fine particles of silicon oxide and the functional material.

As described specifically in the first process, the above combination in the first process is the combination of the fine particles of silicon oxide having the shape formed by three dimensional bonding and the solvent which can disperse these fine particles. As the fine particles, similarly to those described above, fine particles having shapes formed by three dimensional bonding of spherical fine particles having a diameter of 5 to 100 nm and more preferably 10 to 100 nm to each other over a length of 30 to 300 nm arc preferable. Fine particles having shapes formed by three dimensional bonding of spherical fine particles having a diameter of 10 to 50 nm to each other over a length of 40 to 200 nm are more preferable. As the solvent, similarly to that described above, a solvent comprising a hydrophilic solvent and, in particular, an alcohol-based solvent is preferable, and a mixed solvent comprising two or more solvents having different volatilities is preferable.

As described specifically in the second process, the above combination in the second process is the combination of the fine particles of silicon oxide having shapes formed by one dimensional to three dimensional bonding and the mixed solvent comprising a solvent which can disperse these fine particles and a solvent which cannot disperse these fine particles. As the fine particles, similarly to those described above, fine particles having shapes formed by one dimensional to three dimensional bonding of spherical fine particles having a diameter of 5 to 100 nm and more preferably 10 to 100 nm to each other over a length of 30 to 300 nm are preferable. Fine particles having shapes formed by one dimensional to three dimensional bonding of spherical fine particles having a diameter of 10 to 50 nm to each other over a length of 40 to 200 nm are more preferable. In the mixed solvent, similarly to that described above, it is preferable that the solvent which can disperse the fine particles is more volatile than the solvent which cannot disperse the fine particles. Examples of the solvent which can disperse the fine particles include, as described above, hydrophilic solvents such as alcohol-based solvents. Examples of the solvent which cannot disperse the fine particles include, as described above, nonaqueous solvents such as hydrocarbon-based solvents and/or silicone-based solvents.

As described above, it is preferable in this process that, after the above fluid is applied to the surface of the base material, the surface of the base material is kept wet with the fluid until at least the solvent which can disperse the fine particles is vaporized. It is preferable that the fluid is air dried after the fluid is applied to the surface of the base material.

In the following, the process for forming a water repellent coating film on the primer layer described above as the functional coating film of the present invention will be described. The fluid for repelling water used in the process is not particularly limited as long as the fluid comprises a water repellent material which binds to the surface of the base material. In general, it is preferable that the water repellent material is used as a fluid prepared by dissolving the water repellent material in a solvent.

Examples of the water repellent group for exhibiting the water repellent property include fluoroalkyl groups and alkyl groups. As the water repellent material, silane compounds which have a fluoroalkyl group and/or an alkyl group, are compatible with the primer layer formed in advance on the surface of the base material and comprising silicon oxide as the main component and has a hydrolyzable group are preferable. Examples of the hydrolyzable group include alkoxyl groups, acyloxyl groups and chlorine group. Hydrolysis products obtained by partial hydrolysis and polymers obtained by polycondensation may also be used as the silane compound having a hydrolyzable group.

When the fluoroalkyl group is selected as the water repellent group, silane compounds having a fluoroalkyl group exhibiting the excellent water repellent property are preferable.

Examples of the silane compound having a fluoroalkyl group include silane compounds having a fluoroalkyl group and at least one group selected from an alkoxyl group, an acyloxyl group and chlorine group such as CF₃(CF₂)₇(CH₂)Si(OCH₃)₃, CF₃(CF₂)₅(CH₂)₂Si(OCH₃)₃, CF₃(CF₂)₇(CH₂)₂SiCl₃ and CF₃(CF₂)₅(CH₂)₂SiCl₃.

Among these compounds, CF₃(CF₂)₇(CH₂)₂SiCl₃ exhibiting the excellent reactivity and water repellent property is preferable.

When the fluoroalkyl group is used as the water repellent group, it is preferable that the contact angle of water with the water repellent coating film measured by placing 2 mg of a water droplet on the surface of the water repellent coating film is 150 degrees or greater.

On the other hand, when the alkyl group is used as the water repellent group, the use of the alkyl group is advantageous since the ultra water repellent property can be exhibited even when the contact angle is smaller than that exhibited by using the fluoroalkyl group. The sufficient water repellent property can be exhibited when the contact angle of water is 145 degree or greater.

It is considered that this result is obtained since an alkyl group provides more excellent property of rolling water droplets (falling angle) than that provided by a fluoroalkyl group. As the factors affecting the water repellent property, the property of repelling water droplets (the contact angle) and the property of slipping water droplets (the falling angle) can be considered. When the contact angle is 150 degrees or greater, the property of repelling water droplets (the contact angle) affects to a greater extent. When water is spilled on the surface of a base material exhibiting the ultra water repellent property, water spilled to the surface itself is repelled by the energy of spilling, and the water droplets do not remain on the surface. The water repellent property is considered to be exhibited in this manner. On the other hand, when the contact angle is in the range of 145 to 150 degrees, the property of slipping water droplets (the falling angle) affects to a greater extent. It is considered that an alkyl group providing a smaller falling angle exhibits the more excellent water repellent property than that exhibited by using a fluoroalkyl group.

Therefore, when the alkyl group is used as the water repelling group, it is preferable that the contact angle measured by placing 2 mg of a water droplet on the surface of a water repellent coating film is 145 degrees or greater.

From the standpoint of the great contact angle, alkyl groups having 8 to 12 carbon atoms are preferable, and alkyl groups including at least one group selected from octyl group, decyl group and dodecyl group are more preferable.

When the single component coating process is used, the use of the above alkyl group as the water repellent group has the advantage in that the appearance of the product is excellent. In the case of the single component coating process, the primer layer and the water repelling layer are formed in a single step, and it is necessary that the primer layer and the water repellent layer be completely separated from each other while the coating fluid is still in the wet condition. When a portion of the water repellent material is bonded with the surface of the base material faster than other materials, there is the possibility that the primer layer is not formed at the peripheral portions of the portion having the bonded water repellent material, and the coating layer is not formed uniformly on the surface since such portions tend to repel fluids. Since the alkyl group provides the smaller water repellent property and the smaller oil repellent property (the contact angle) than the fluoroalkyl group, the uneven formation of the coating layer can be suppressed by using the alkyl group, and the appearance can be improved. A coating film exhibiting a more excellent water repellent property can be obtained without the uneven formation of the coating layer by adding a fluoroalkyl group to the alkyl group within the range that the repelling of the fluid does not take place.

The solvent for dissolving the water repellent material is not particularly limited as long as the water repellent material can be dissolved. Hydrophilic solvents and nonaqueous solvent can be used as the solvent. As the hydrophilic solvent, alcohol-based solvents exhibiting the excellent handling property are preferable. As the nonaqueous solvent, for example, solvents comprising paraffinic hydrocarbons, fluorocarbon solvents or silicone oils as the main components are used.

In the two component coating process, it is preferable that the primer layer is coated with the fluid for forming the functional layer without mechanically touching the primer layer so that the fine roughness formed on the primer is not damaged. Examples of the coating process include the flow coating process, the dip coating process, the curtain coating process, the spin coating process, the spray coating process, the bar coating process and the dipping adsorption process. Among these processes, the flow coating process and the spray coating process are preferable so that the coating can be conducted efficiently.

As the functional layer in the present invention, an antifouling coating film may be formed. As the antifouling coating film, organic coating films having a polyalkyleneoxy group are preferable.

The base material used in the present invention is not particularly limited. Base materials having a hydrophilic group on the surface are preferable. Examples of the base material include base materials using glass, ceramics, plastics and metals as the material. It is preferable that one of transparent glass plates, resin plates and resin films is used.

When the amount of the hydrophilic group on the surface of the base material is insufficient, the hydrophilicity of the surface may be increased by treating the surface with plasma containing oxygen or in the atmosphere of corona in advance. Alternatively, the process of the present invention may be conducted after the surface of the base material is treated for increasing the hydrophilicity by irradiation with ultraviolet light having a wavelength in the vicinity of 200 to 300 nm under an atmosphere containing oxygen.

The primer layer comprising silicon oxide as the main component which is used in the present invention exhibits the effect of suppressed reflection due to the small refractive index and the effect of the roughness on the surface.

### EXAMPLES

The present invention will be described more specifically with reference to examples in the following. However, the present invention is not limited to the examples.

### Example 1

To 98.85 g of ethanol, 1.15 g of "pearls-like" (having a shape of a pearl necklace) colloidal silica having a shape formed by three dimensional bonding of spherical particles of colloidal silica having a primary particle diameter of 10 to 15 nm to each other (PS-SO; manufactured by NISSAN KAGAKU KOGYO Co., Ltd.) was added. The resultant mixture was stirred for 5 minutes, and a coating fluid for the primer layer was obtained.

Heptadecafluorodecyltrichlorosilane (CF₃(CF₂)₇(CH₂)₂SiCl₃) in an amount of 2 g was added to 98 g of decamethylcyclopentasiloxane under stirring, and a water repellent was obtained.

The coating fluid for the primer layer obtained above was applied to the surface of a cleaned glass base material under a relative humidity of 30% at the room temperature in accordance with the flow coating process, and the obtained coating layer was air dried. The water repellent obtained above was applied to the formed primer layer in accordance with the flow coating process, and the coated glass base material was left standing for 1 minute while the surface was kept wet with the water repellent. Then, the water repellent remaining on the surface of the coated glass base material was completely washed away with ethanol. The surface of the coated glass base material was air dried, and a glass plate treated with the water repellent was obtained.

The shape of the surface of the glass plate treated with the water repellent obtained as described above was observed using a scanning electron microscope ("S-4700 type"; manufactured by HITACHI SEISAKUSYO Co., Ltd.) under the condition of an acceleration voltage of 5 kV, an emission current of 10 µA, an angle of inclination of 10 degrees and a magnification of 100,000 times. The result is shown in Figure 1. It could be confirmed from the result shown in Figure 1 that the surface of the glass plate treated with the water repellent had a shape formed by uneven accumulation of fine particles on the surface.

To evaluate the surface roughness of the glass plate treated with the water repellent obtained above, the arithmetical mean deviation of the assessed profile (Ra) was measured using an electronic force microscope ("SPI3700"; manufactured by SEIKO DENSHI Co., Ltd.) in the cyclic contact mode. The greater the value of Ra, the greater the surface roughness of the film.

The water repellent property of the glass plate treated with the water repellent was evaluated using the contact angle of water. Using a contact angle meter ("CA-DT"; manufactured by KYOWA KAIMEN KAGAKU Co., Ltd.), a water droplet having a mass of 2 mg was placed on the surface of the glass plate, and the static contact angle was measured. The greater the contact angle, the more excellent the static water repellent property.

Using the glass plate treated with the water repellent, the transparency of the film was evaluated as the haze value. The haze value was measured by using a direct-reading haze computer ("HGM-2DM"; manufactured by SUGA SHIKENKI Co., Ltd.). The smaller the haze value, the more excellent the transparency.

### Example 2

To 98.85 g of ethanol, 1.15 g of the same "pearls-like" colloidal silica as that used in Example 1 and 0.00042 g of spherical colloidal silica having a particle diameter of 40 to 50 nm (ST-OL; manufactured by NISSAN KAGAKU KOGYO Co., Ltd.) were added. The resultant mixture was stirred for 5 minutes, and a coating fluid for the primer layer was obtained.

The coating fluid for the primer layer obtained above was applied to the surface of a cleaned glass base material under a relative humidity of 30% at the room temperature in accordance with the flow coating process, and the obtained coating layer was air dried. The water repellent prepared in accordance with the same procedure as that conducted in Example 1 was applied to the formed primer layer in accordance with the flow coating process, and the coated glass base material was left standing for 1 minute while the surface was kept wet with the water repellent. Then, the water repellent remaining on the surface of the coated glass base material was completely washed away with ethanol. The surface of the coated glass base material was air dried, and a glass plate treated with the water repellent was obtained.

### Example 3

To a mixed solvent containing 40.0 g of ethanol and 58.85 g of decamethylcyclopentasiloxane (KF-995; manufactured by SHIN-ETSU SILICONE Co., Lt.), 1.15 g of chain colloidal silica having a shape formed by one dimensional to two dimensional bonding of particles of spherical colloidal silica having a primary particle diameter of 10 to 20 nm to each other over a length of 40 to 100 nm (ST-OUP; manufactured by NISSAN KAGAKU KOGYO Co., Ltd.) was added. The resultant mixture was stirred for 5 minutes, and a coating fluid for the primer layer was obtained.

The coating fluid for the primer layer obtained above was applied to the surface of a cleaned glass base material under a relative humidity of 30% at the room temperature in accordance with the flow coating process, and the coated glass base material was left standing for 1 minute while the surface was kept wet with the fluid. The water repellent prepared in accordance with the same procedure as that conducted in Example 1 was applied to the formed primer layer in accordance with the flow coating process, and the coated glass base material was left standing for 1 minute while the surface was kept wet with the water repellent. Then, the water repellent remaining on the surface of the coated glass base material was completely washed away with ethanol. The surface of the coated glass base material was air dried, and a glass plate treated with the water repellent was obtained.

### Example 4

In accordance with the same procedures as those conducted in Example 3 except that isoparaffin-based hydrocarbons (ISOSOL 300; manufactured by NIPPON SEKIYU HAGAKU Co., Ltd.) was used in place of decamethylcyclopentasiloxane, a glass plate treated with the water repellent was obtained.

### Example 5

To 98.0 g of ethanol, 1.0 g of heptadecafluorodecyltrimethoxysilane (CF₃(CF₂)₇(CH₂)₂Si(OCH₃)₃; manufactured by SHIN-ETSU SILICONE Co., Ltd.) was added under stirring, and 1.0 g of 0.1N hydrochloric acid was further added. The resultant mixture was stirred for 2 hours, and a hydrolysis product of the fluorine-based water repellent was obtained.

The hydrolysis product of the fluorine-based water repellent obtained above in an amount of 20.0 g was added to 78.85 g of ethanol, and 1.15 g of the same "pearls-like" colloidal silica as that used in Example 1 was further added. The resultant mixture was stirred for 5 minutes, and a fluid for the water repellent treatment was obtained.

The fluid for the water repellent treatment obtained above was applied to the surface of a cleaned glass base material under a relative humidity of 30% at the room temperature in accordance with the flow coating process. The coated glass base material thus obtained was air dried, and a glass plate treated with the water repellent was obtained.

### Example 6

To a mixed solvent containing 20.0 g of ethanol and 58.85 g of isoparaffin-based hydrocarbons, 20.0 g of the hydrolysis product of a fluorine-based water repellent obtained in Example 5 was added. The same chain colloidal silica as that used in Example 3 in an amount of 1.15 g was further added. The resultant mixture was stirred for 5 minutes, and a fluid for the water repellent treatment was obtained.

The fluid for the water repellent treatment obtained above was applied to the surface of a cleaned glass base material under a relative humidity of 30% at the room temperature in accordance with the flow coating process. The coated glass base material thus obtained was air dried, and a glass plate treated with the water repellent was obtained.

### Example 7

To 97.77 g of isopropyl alcohol, 1.15 g of the same "pearls-like" colloidal silica as that used in Example 1 and 0.08 g of decyltrimethoxysilane (CH₃(CH₂)₉Si(OCH₃)₃; manufactured by SHIN-ETSU SILICONE Co., Ltd.) were added. After the resultant mixture was stirred for 5 minutes, 1.0 g of 0.1N hydrochloric acid was further added. The resultant mixture was stirred for 5 minutes, and a fluid for the water repellent treatment was obtained.

The fluid for the water repellent treatment obtained above was applied to the surface of a cleaned glass base material under a relative humidity of 30% at the room temperature in accordance with the flow coating process. The coated glass base material thus obtained was air dried, and a glass plate treated with the water repellent was obtained.

### Example 8

To 97.63 g of isopropyl alcohol, 1.15 g of the same "pearls-like" colloidal silica as that used in Example 1, 0.08 g of decyltrimethoxysilane which was the same as that used in Example 7 and 0.24 g of tetraethoxysilane (Si(OCH₂CH₃)₄; manufactured by SHIN-ETSU SILICONE Co., Ltd.) were added. After the resultant mixture was stirred for 5 minutes, 1.0 g of 0.1N hydrochloric acid was further added. The resultant mixture was stirred for 5 minutes, and a fluid for the water repellent treatment was obtained.

The fluid for the water repellent treatment obtained above was applied to the surface of a cleaned glass base material under a relative humidity of 30% at the room temperature in accordance with the flow coating process. The coated glass base material thus obtained was air dried, and a glass plate treated with the water repellent was obtained.

### Example 9

To 8.7 g of isopropyl alcohol, 1.0 g of decyltrimethoxysilane which was the same as that used in Example 7 was added. After the resultant mixture was stirred for 5 minutes, 0.3 g of 0.1N hydrochloric acid was further added. The resultant mixture was stirred for 1 hour, and a hydrolysis product of the alkylsilane was obtained.

To 98.05 g of isopropyl alcohol, 1.15 g of the same "pearls-like" colloidal silica as that used in Example 1 and 0.8 g of the hydrolysis product of the alkylsilane obtained above were added. The resultant mixture was stirred for 5 minutes, and a fluid for the water repellent treatment was obtained.

The fluid for the water repellent treatment obtained above was applied to the surface of a cleaned glass base material under a relative humidity of 30% at the room temperature in accordance with the flow coating process. The coated glass base material thus obtained was air dried, and a glass plate treated with the water repellent was obtained.

### Example 10

To 294.0 g of isopropyl alcohol, 6.0 g of the same "pearls-like" colloidal silica as that used in Example 1 was added, and the resultant mixture was stirred for 5 minutes. Then, 50 g of molecular sieves (the diameter of beads: 2 mm; the diameter of holes: 0.3 mm; manufactured by KANTO KAGAKU Co., Ltd.) was further added. After the resultant mixture was stirred for 5 minutes, the mixture was left standing for 8 days, and a dehydration product of a dispersion of fine particles of silica was obtained.

The content of water in the obtained dehydration product of a dispersion of fine particles of silica was measured in accordance with the Karl Fisher method. The content of water was 1.78% by mass before the dehydration treatment and 0.14% by mass after the dehydration treatment. Thus, it was confirmed that the dehydration was achieved.

Then, 57.0 g of the dehydration product of a dispersion of fine particles of silica obtained above and 0.8 g of the hydrolysis product of the alkyl silane obtained in Example 9 were added to 42.2 g of isopropyl alcohol. The resultant mixture was stirred for 5 minutes, and a fluid for the water repellent treatment was obtained.

The fluid for the water repellent treatment obtained above was applied to the surface of a cleaned glass base material under a relative humidity of 30% at the room temperature in accordance with the flow coating process. The coated glass base material thus obtained was air dried, and a glass plate treated with the water repellent was obtained.

### Example 11

To 9.8 g of isopropyl alcohol, 0.1 g of heptadecafluorodecyltrimethoxysilane which was the same as that used in Example 5 was added. After the resultant mixture was stirred for 5 minutes, 0.1 g of 0.1N hydrochloric acid was further added. The resultant mixture was stirred for 1 hour, and a hydrolysis product of the fluoroalkylsilane was obtained.

To 40.8 g of isopropyl alcohol, 57.0 g of the dehydration product of a dispersion of fine particles of silica obtained in Example 10, 0.8 g of the hydrolysis product of the alkylsilane obtained in Example 9 and 0.4 g of the hydrolysis product of the fluoroalkylsilane obtained above were added. After the resultant mixture was stirred for 5 minutes, 0.1 g of 0.1N hydrochloric acid was further added. The resultant mixture was stirred for 5 minutes, and a fluid for the water repellent treatment was obtained.

The fluid for the water repellent treatment obtained above was applied to the surface of a cleaned glass base material under a relative humidity of 30% at the room temperature in accordance with the flow coating process. The coated glass base material thus obtained was air dried, and a glass plate treated with the water repellent was obtained.

### Example 12

A fluid for the water repellent treatment obtained in accordance with the same procedures as those conducted in Example 9 was applied to the surface of a cleaned glass base material under a relative humidity of 50% at the room temperature in accordance with the flow coating process. The coated glass base material thus obtained was air dried, and a glass plate treated with the water repellent was obtained.

### Example 13

A fluid for the water repellent treatment obtained in accordance with the same procedures as those conducted in Example 11 was applied to the surface of a cleaned glass base material under a relative humidity of 70% at the room temperature in accordance with the flow coating process. The coated glass base material thus obtained was air dried, and a glass plate treated with the water repellent was obtained.

### Example 14

To 9.8 g of isopropyl alcohol, 0.1 g of heptadecafluorodecyltrimethoxysilane which was the same as that used in Example 5 was added. After the resultant mixture was stirred for 5 minutes, 0.1 g of 0.1N hydrochloric acid was further added. The resultant mixture was stirred for 1 hour, and a hydrolysis product of the fluoroalkylsilane was obtained.

To 40.8 g of isoparaffin ("ISOSOL 200"; manufactured by NIPPON SEKIYU KAGAKU Co., Ltd.), 57.0 g of the dehydration product of a dispersion of fine particles of silica obtained in Example 10, 0.8 g of the hydrolysis product of the alkylsilane obtained in Example 9 and 0.4 g of the hydrolysis product of the fluoroalkylsilane obtained above were added. After the resultant mixture was stirred for 5 minutes, 0.1 g of 0.1N hydrochloric acid was further added. The resultant mixture was stirred for 5 minutes, and a fluid for the water repellent treatment was obtained.

The fluid for the water repellent treatment obtained above was applied to the surface of a cleaned glass base material under a relative humidity of 70% at the room temperature in accordance with the flow coating process. The coated glass base material thus obtained was air dried, and a glass plate treated with the water repellent was obtained.

### Example 15

To 20.72 g of isopropyl alcohol, 3.75 g of the same "pearls-like" colloidal silica as that used in Example 1, 0.27 g of decyltrimethoxysilane which was the same as that used in Example 7 and 0.013 g of heptadecafluorodecyltrimethoxysilane which was the same as that used in Example 5 were added. After the resultant mixture was stirred for 5 minutes, 0.25 g of 1N hydrochloric acid was further added. The resultant mixture was stirred at 50°C for 2 days, and a product of co-hydrolysis and polycondensation of the water repellent material and the fine particles of silicon oxide was obtained. To 96.08 g of isopropyl alcohol, 3.88 g of the product of co-hydrolysis and polycondensation obtained above was added. After the resultant mixture was stirred for 5 minutes, 0.049 g of 1N hydrochloric acid was further added. The resultant mixture was stirred for 5 minutes, and a fluid for the water repellent treatment was obtained.

The fluid for the water repellent treatment obtained above was applied to the surface of a cleaned glass base material under a relative humidity of 50% at the room temperature in accordance with the flow coating process. The coated glass base material thus obtained was air dried, and a glass plate treated with the water repellent was obtained.

The shape of the surface of the glass plates treated with the water repellents obtained in Examples 1 to 15 was observed using a scanning electron microscope, and it was confirmed that all films had the shape formed by accumulating fine particles unevenly and randomly.

The surface roughness of the glass plates treated with the water repellents obtained in Examples 1 to 15 was measured using an electronic force microscope, and it was confirmed that Ra=15 nm or greater with respect to all films, showing that all films had values of Ra greater than 10 nm. Thus, it was confirmed that the surface roughness of the films is great.

The properties obtained in Examples, i.e., the surface roughness, the initial contact angle and the haze value, are shown together in Table 1.

It was confirmed that the glass plates treated with the water repellents which were obtained in Examples 1 to 15 had the ultra water repellent property. The haze value was 1.0% or smaller, and it was confirmed that the transparency was excellent and the color tone of the transmitted light and the color tone of the reflected light are both neutral. Thus, it was confirmed that there are no problems about the appearance.

The glass plates treated with the water repellents obtained in Examples 1 to 15 showed sufficiently suppressed reflection, This result is considered to be obtained due to the effect of the small refractive index and the surface roughness of the primer layer comprising silica as the main component.

### Comparative Example 1

A glass plate treated with a water repellent was obtained in accordance with the same procedures as those conducted in Example 1 except that the same chain colloidal silica as that used in Example 3 was used in place of the "pearls-like" colloidal silica.

The obtained glass plate treated with a water repellent was evaluated in accordance with the same methods as those used in Examples 1 to 15. The results are shown in Table 1. The initial contact angle was 140 degrees, and it was confirmed that the water repellent property was poor.

### Comparative Example 2

A glass plate treated with a water repellent was obtained in accordance with the same procedures as those conducted in Example 3 except that the same spherical colloidal silica as that used in Example 2 was used in place of the chain colloidal silica used in Example 3.

The obtained glass plate treated with a water repellent was evaluated in accordance with the same methods as those used in Examples 1 to 15. The results are shown in Table 1. The initial contact angle was 112 degrees, and it was confirmed that the water repellent property was poor.

**Table 1**

| Sample | Roughness of surface | Initial contact angle | Haze value | Maximum height | Average thickness of film |
|---|---|---|---|---|---|
| | (Ra) (mm) | (degree) | (%) | (Ry) (mm) | (nm) |
| Example 1 | 17 | 153 | 0.1 | 200 | 70 |
| Example 2 | 18 | 154 | 0.2 | 250 | 100 |
| Example 3 | 17 | 153 | 0.2 | 200 | 80 |
| Example 4 | 17 | 152 | 0.2 | 200 | 60 |
| Example 5 | 16 | 153 | 0.4 | 150 | 70 |
| Example 6 | 17 | 152 | 0.4 | 180 | 50 |
| Example 7 | 18 | 153 | 0.1 | 180 | 70 |
| Example 8 | 16 | 151 | 0.2 | 150 | 50 |
| Example 9 | 16 | 151 | 0.2 | 170 | 60 |
| Example 10 | 17 | 152 | 0.3 | 230 | 80 |
| Example 11 | 17 | 154 | 0.3 | 200 | 70 |
| Example 12 | 19 | 148 | 0.6 | 200 | 70 |
| Example 13 | 20 | 153 | 1.0 | 250 | 80 |
| Example 14 | 20 | 153 | 0.5 | 230 | 70 |
| Example 15 | 22 | 152 | 0.6 | 250 | 60 |
| Comparative Example 1 | 9 | 140 | 0.2 | 60 | 50 |
| Comparative Example 2 | 16 | 112 | 1.3 | 80 | 50 |

### INDUSTRIAL APPLICABILITY

As described above, in accordance with the present invention, the article coated with a functional coating film comprising a base material, a primer layer coating the surface of the base material and a functional layer coating the primer layer exhibits the excellent transparency while the fine roughness is formed since fine particles are accumulated unevenly on the primer layer. As the result, the article coated with the functional coating film which exhibits the excellent water repellent property or the excellent antifouling property while the transparency required for the functional coating film is maintained can be provided.

## Claims

1. An article coated with a functional coating film which comprises a base material, a primer layer which coats a surface of the base material and has fine roughness and a functional layer coating the primer layer, wherein the primer layer having fine roughness has portions formed by unevenly accumulating fine particles.

2. An article coated with a functional coating film according to Claim 1, wherein the primer layer comprises silicon oxide as a main component.

3. An article coated with a functional coating film according to any one of Claims 1 and 2, wherein an average thickness (H) of the functional coating film comprising the primer layer and the functional layer is 30 nm or greater and 200 nm or smaller, and a difference between a maximum height of profile (Ry) on a surface and the average thickness (H) of the functional coating film is 50 nm or greater.

4. An article coated with a functional coating film according to Claim 1, wherein a diameter of the fine particles is 5 to 100 nm.

5. An article coated with a functional coating film according to Claim 1, wherein a surface roughness of the functional coating film comprising the primer layer and the functional layer is at least 10 nm expressed as an arithmetical mean deviation of the assessed profile (Ra), and a haze value of the functional coating film is 1% or smaller.

6. An article coated with a functional coating film according to Claim 1, wherein the functional layer is a water repellent coating film or an antifouling coating film.

7. An article coated with a functional coating film according to Claim 6, wherein the water repellent coating film is an organic coating film having at least one of fluoroalkyl groups and alkyl groups.

8. An article coated with a functional coating film according to Claim 7, wherein the alkyl group includes at least one group selected from octyl group, decyl group and dodecyl group.

9. An article coated with a functional coating film according to Claim 6, wherein a contact angle of water with the water repellent coating film measured by placing 2 mg of a water droplet on a surface of the water repellent coating film is at least 145 degrees.

10. An article coated with a functional coating film according to Claim 6, wherein the antifouling coating film is an organic coating film having a polyalkyleneoxyl group.

11. An article coated with a functional coating film according to Claim 1, wherein the base material is a material selected from transparent glass plates, resin plates and resin films.

12. A coating material for forming a functional coating film which is a coating material for forming a primer layer which comprises silicon oxide as a main component and has portions formed by unevenly accumulating fine particles of silicon oxide and a functional layer on the formed primer layer, the coating material comprising a fluid containing the fine particles of silicon oxide and a fluid for forming the functional layer in combination.

13. A coating material for forming a functional coating film which is a coating material for forming a primer layer which comprises silicon oxide as a main component and has portions formed by unevenly accumulating fine particles of silicon oxide and a functional layer on the formed primer layer, the coating material comprising a fluid containing the fine particles of silicon oxide and a functional material.

14. A coating material for forming a functional coating film according to any one of Claims 12 and 13, wherein the fine particles of silicon oxide comprise fine particles having shapes formed by three dimensional bonding, and a solvent of the fluid containing the fine particles of silicon oxide or a solvent of the fluid containing the fine particles of silicon oxide and a functional material is a solvent which can disperse the fine particles of silicon oxide.

15. A coating material for forming a functional coating film according to Claim 14, wherein the fine particles of silicon oxide comprise fine particles having shapes formed by three dimensional bonding of spherical fine particles having a diameter of 5 to 100 nm to each other over a length of 30 to 300 nm.

16. A coating material for forming a functional coating film according to Claim 15, wherein the fine particles of silicon oxide comprise fine particles having shapes formed by cyclic bonding of the spherical fine particles to each other.

17. A coating material for forming a functional coating film according to any one of Claims 12 and 13, wherein the fine particles of silicon oxide comprise fine particles having shapes formed by one dimensional to three dimensional bonding, and a solvent of the fluid containing the fine particles of silicon oxide or a solvent of the fluid containing the fine particles of silicon oxide and a functional material is a mixed solvent comprising a solvent which can disperse the fine particles of silicon oxide and a solvent which cannot disperse the fine particles of silicon oxide.

18. A coating material for forming a functional coating film according to Claim 17, wherein the fine particles of silicon oxide comprise fine particles having shapes formed by one dimensional to three dimensional bonding of spherical fine particles having a diameter of 5 to 100 nm to each other over a length of 30 to 300 nm.

19. A coating material for forming a functional coating film according to Claim 18, wherein the fine particles of silicon oxide comprise fine particles having shapes formed by linear and/or cyclic bonding of the spherical fine particles to each other.

20. A coating material for forming a functional coating film according to any one of Claims 14 and 17, wherein the solvent which can disperse the fine particles of silicon oxide comprises a hydrophilic solvent.

21. A coating material for forming a functional coating film according to Claim 20, wherein the hydrophilic solvent is an alcohol-based solvent.

22. A coating material for forming a functional coating film according to Claim 17, wherein the solvent which cannot disperse the fine particles of silicon oxide is a nonaqueous solvent.

23. A coating material for forming a functional coating film according to Claim 22, wherein the nonaqueous solvent is at least one of hydrocarbon solvents and silicone-based solvents.

24. A coating material for forming a functional coating film according to Claim 17, wherein, in the mixed solvent, the solvent which can disperse the fine particles of silicon oxide is more volatile than the solvent which cannot disperse the fine particles of silicon oxide.

25. A coating material for forming a functional coating film according to any one of Claims 12 and 13, wherein at least one of metal compounds and water glass is added to the fluid containing the fine particles of silicon oxide or the fluid containing the fine particle of silicon oxide and a functional material.

26. A coating material for forming a functional coating film according to Claim 13, wherein the fluid containing the fine particle of silicon oxide and a functional material comprises 0.01 to 3% by mass of water and 0.00001 to 0.1% by mass of a catalyst.

27. A coating material for forming a functional coating film according to any one of Claims 12 and 13, wherein the functional layer is a water repellent coating film or an antifouling coating film.

28. A coating material for forming a functional coating film according to Claim 27, wherein the water repellent coating film is an organic coating film having at least one of fluoroalkyl groups and alkyl groups.

29. A coating material for forming a functional coating film according to Claim 28, wherein the alkyl groups include at least one group selected from octyl group, decyl group and dodecyl group.

30. A process for producing an article coated with a functional coating film which comprises a base material, a primer layer which coats a surface of the base material and has fine roughness and a functional layer coating the primer layer, the process comprising steps of coating the surface of the base material with a fluid containing fine particles of silicon oxide, forming the primer layer having fine roughness by unevenly accumulating the fine particles of silicon oxide on the surface of the base material, and coating the formed primer layer with a fluid for forming the functional layer.

31. A process for producing an article coated with a functional coating film according to Claim 30, wherein, after the surface of the base material is coated with the fluid containing the fine particles of silicon oxide, the fluid coating the surface of the base material is air dried at an ordinary temperature.

32. A process for producing an article coated with a functional coating film according to Claim 30, wherein the fine particles of silicon oxide comprise fine particles having shapes formed by one dimensional to three dimensional bonding, a solvent of the fluid containing the fine particles of silicon oxide is a mixed solvent comprising a solvent which can disperse the fine particles of silicon oxide and a solvent which cannot disperse the fine particles of silicon oxide, and, in the step of coating the surface of the base material with a fluid containing the fine particles of silicon oxide, the surface of the base material is kept wet with the fluid containing the fine particles of silicon oxide until at least the solvent which can disperse the fine particles of silicon oxide is vaporized.

33. A process for producing an article coated with a functional coating film according to Claim 30, which comprises adding at least one of metal compounds and water glass to the fluid containing the fine particles of silicon oxide, coating the surface of the base material with the obtained fluid containing the fine particles of silicon oxide, air drying the fluid coating the surface of the base material at an ordinary temperature, and baking an obtained film at 150 to 650°C.

34. A process for producing an article coated with a functional coating film according to Claim 30, wherein the primer layer is coated with the fluid for forming the functional layer without mechanically touching the primer layer.

35. A process for producing an article coated with a functional coating film which comprises a base material, a primer layer which coats a surface of the base material and has fine roughness and a functional layer coating the primer layer, the process comprising steps of coating the surface of the base material with a fluid containing the fine particles of silicon oxide and a functional material, and forming the primer layer having fine roughness by unevenly accumulating the fine particles of silicon oxide on the surface of the base material and the functional layer on the formed primer layer,

36. A process for producing an article coated with a functional coating film according to Claim 35, wherein, after the surface of the base material is coated with the fluid containing the fine particles of silicon oxide and a functional material, the fluid coating the surface of the base material is air dried at an ordinary temperature.

37. A process for producing an article coated with a functional coating film according to Claim 35, which comprises adding at least one of metal compounds and water glass to the fluid containing the fine particles of silicon oxide and a functional material, coating the surface of the base material with the obtained fluid containing the fine particles of silicon oxide and a functional material, air drying the fluid coating the surface of the base material at an ordinary temperature, and baking an obtained film at 150 to 350°C.
